# EUROPÄISCHE PATENTSCHRIFT

(11) **EP 2 526 460 B1**
(45) Veröffentlichungstag und Bekanntmachung des Hinweises auf die Patenterteilung: **02.07.2014**
(21) Anmeldenummer: 11701747.5
(22) Anmeldetag: 18.01.2011
(51) Int. Cl.: G03B 9/22

(54) **Vorrichtung zur Synchronisierung von Verschlusslamellen**
Device for the synchronising of shutter blades
Dispositif pour synchroniser des lamelles d'un obturateur

(30) Priorität: 15.05.2010 DE 102010020638; 24.01.2010 DE 102010005432
(43) Veröffentlichungstag der Anmeldung: 28.11.2012
(73) Patentinhaber: Leica Camera AG, 35606 Solms (DE)
(72) Erfinder: AAB, Konstantin, 34295 Edermünde-Grifte (DE)
(74) Vertreter: Stamer, Harald
(86) Internationale Anmeldenummer: PCT/EP2011/000187
(87) Internationale Veröffentlichungsnummer: WO 2011/088984

(56) Entgegenhaltungen:
- DE-A1-102009 020 287
- DE-C- 969 694
- US-A- 2 269 400
- US-A- 2 354 168
- US-A- 3 075 445
- US-A- 3 257 921
- US-A- 5 287 140

## Beschreibung

Die Erfindung betrifft eine Vorrichtung zur Synchronisierung von Verschlußlamellen, die jeweils an einem Schwenkarm befestigt sind, der auf einem kreisringförmigen Lamellenträger an einer Schwenkachse drehbar gelagert ist.

Aus US 5 287 140 A ist eine Vorrichtung bekannt, bei der die Verschlußlamellen jeweils an einem Schwenkarm befestigt sind, der auf einem kreisförmigen Lamellenträger an einer Schwenkachse drehbar gelagert ist und wobei konzentrisch zum Lamellenträger eine Ringscheibe angeordnet ist, die mit jedem der Schwenkarme formschlüssig gekoppelt ist und einen synchronen Antrieb der Schwenkbewegung aller Schwenkarme bewirkt.

Aus der älteren Patentanmeldung DE 10 2009 020 287.0 der Anmelderin ist ein fotografischer Zentralverschluss bekannt, bei dem auf einem ringförmigen Lamellenträger eine Mehrzahl von Verschlußlamellen schwenkbar gelagert sind.

Die Verschlußlamellen sind am äußeren Boden eines topfförmigen Schwenkarmes befestigt. In die topfförmige Öffnung des Schwenkarmes ist die Schwenkachse der Verschlußlamellen eingesetzt. Am äußeren Topfrand eines jeden Schwenkarmes greift eine Stellvorrichtung zum Auslösen der Schwenkbewegung an.

Um die Schwenkachse des Schwenkarmes herum ist in den Schwenkarm eine Spiralfeder eingelegt, deren einer Arm am Schwenkarm festgelegt ist und deren anderer freier Arm am Lamellenträger befestigt ist. Beim Ausschwenken der Verschlußlamellen aus der Geschlossenstellung des Zentralverschlusses heraus in die Offenstellung wird die Spiralfeder gespannt.

Als Stellvorrichtung für die Schwenkbewegung ist eine ringförmige offene Nockenscheibe vorgesehen. Beim Drehen der Nockenscheibe um die Verschlußöffnung herum heben die Nocken jeweils über eine Flanke den individuellen Schwenkarm zu einer Drehung um seine Schwenkachse an. Die vollständige Öffnung des Zentralverschlusses ist erreicht, wenn die Schwenkarme der Verschlußlamellen jeweils auf einem Nockenkopf unter der Spannkraft der Spiralfeder aufliegen. In dieser Stellung kann die Drehung der Nockenscheibe angehalten werden oder kontinuierlich weitergeführt werden. Nach Beendigung der Haltefunktion fällt der Schwenkarm aufgrund der Spannkraft der Spiralfeder vom Nockenkopf herunter in ein Nockental, d.h. in die Geschlossenstellung des Zentralverschlusses zurück.

Bei der Mehrzahl von Verschlußlamellen lässt es sich nicht vermeiden, dass die Spannkräfte der Spiralfedern unterschiedlich ausfallen. Beim Anheben der Schwenkarme und Überlaufen der Nockenköpfe entstehen Reibungskräfte zwischen den Nocken und dem äußeren Topfrand der Schwenkarme, die außer von der Materialbearbeitung auch von den Federkräften der Spiralfeder abhängen. Bei sehr kurzen Verschlußzeiten, d.h. hohen Stellgeschwindigkeiten der Verschlußlamellen ist dann zu beobachten, dass die Verschlußlamellen ihre Rückstellbewegung zu geringfügig unterschiedlichen Zeiten ausführen. Die sich in der Offenstellung nur geringfügig überlappenden Lamellenblätter können sich dabei verhaken, was zu einem Ausfall des Zentralverschlusses führen kann.

Beim Rückfall der Schwenkarme in die Geschlossenstellung laufen die Schwenkarme gegen einen Anschlag an, an dem sie je nach Dämpfung erst nach kurzem Überschwingen zur Ruhe kommen. Zeitlich unterschiedliche Rückfallbewegungen der verschiedenen Verschlußlamellen können daher zu ungleichmäßigen Abdeckungen der Verschlußöffnung führen.

Der Erfindung lag daher die Aufgabe zugrunde, einen gleichmäßigen Ablauf der Verschlußlamellen sicherzustellen.

Erfindungsgemäß wird dazu konzentrisch zum Lamellenträger innerhalb eines die Schwenkachsen verbindenden Kreises eine Synchronisierungsscheibe angeordnet, die mit jedem der Schwenkarme gekoppelt ist. Die Kopplung erfolgt über ein an der Synchronisierungsscheibe nasenförmig angeformtes, radial nach außen weisendes Langloch. An die Schwenkarme wird an geeigneter Stelle ein Stift angesetzt, der jeweils formschlüssig in ein zugehöriges Langloch eingreift. Die Lage der Stifte und die Länge der Langlöcher sind so dimensioniert, dass der Stift in der Geschlossenstellung der Verschlußlamellen am radial inneren Ende des Langlochs und in der Offenstellung am radial äußeren Ende des Langlochs steht.

Die Synchronringscheibe wird bei der Montage einerseits auf die die Schwenkarme antreibende Nockenscheibe aufgelegt und andererseits von Ringscheiben abgedeckt. Die Synchronringscheibe wird ausschließlich auf Zug und Schub beansprucht und kann sich dabei nicht in der Fläche anheben. Bei der Auswahl eines ausreichend reiß- und stoßfesten Kunststoffes kann die Synchronringscheibe sehr dünn und leicht ausgeführt werden, so dass für ihre Mitführung beim Ablauf der Verschlußlamellen keine besonderen zusätzlichen Kräfte aufzuwenden sind. Die Synchronringscheibe übt selbst keine originäre Stellfunktion aus, sondern gleicht durch ihre mechanische Kopplung aller Schwenkarme nur unregelmäßige Verzögerungen im Ablauf der einzelnen Verschlußlamellen aus. Die Entlastung von einer Stellfunktion kann dadurch unterstützt werden, dass die Schwenkarme in der Offenstellung gegen ein frei schwingendes Federblatt laufen, das den Rücklauf der Schwenkarme zusätzlich anstößt.

Ein Ausführungsbeispiel ist in der Zeichnung schematisch dargestellt.

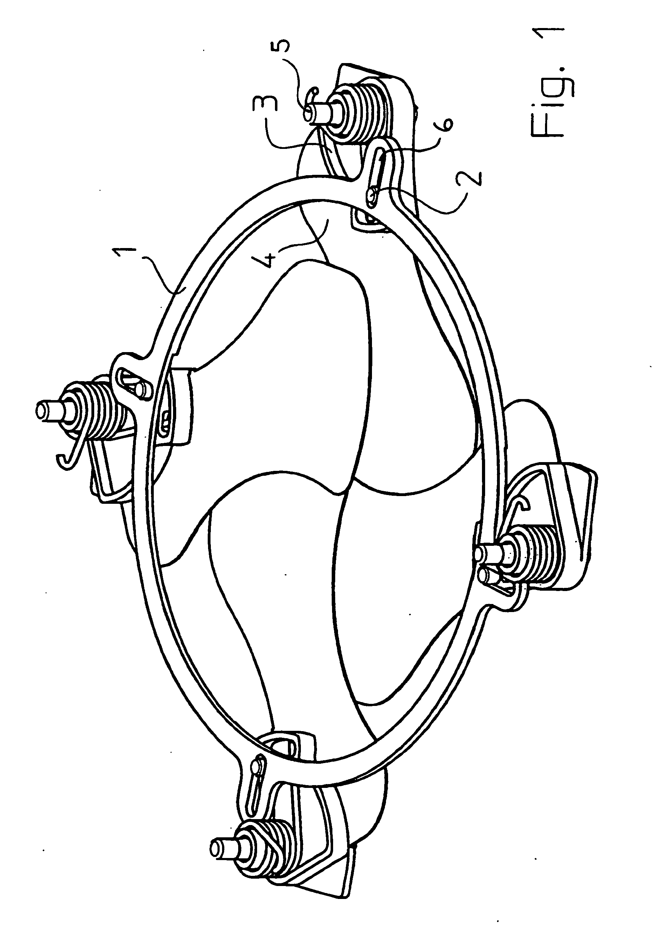

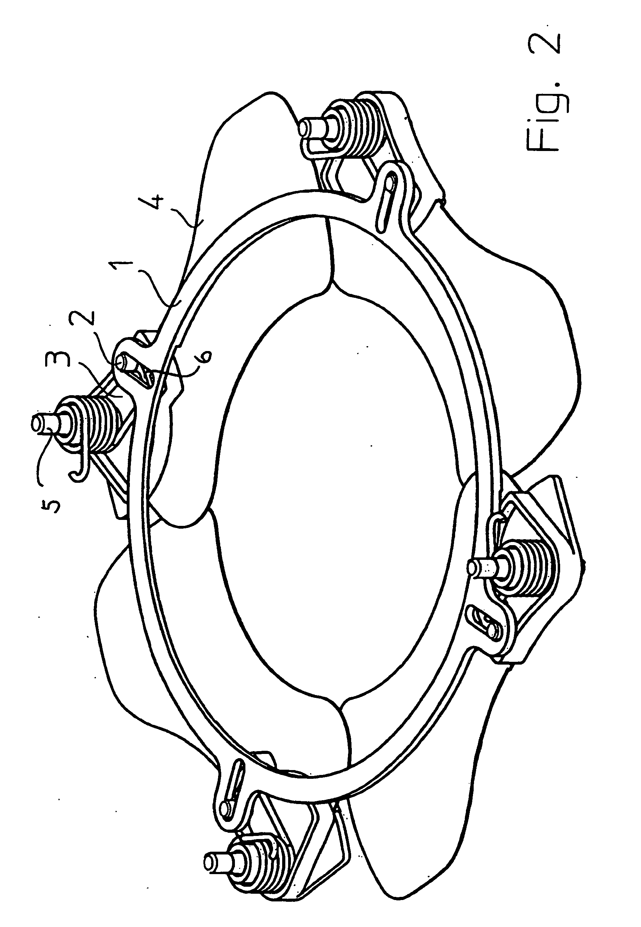

In den Fig. 1 und 2 ist die Synchronringscheibe 1 im Eingriff mit einem Stift 2 an einem Schwenkarm 3 in der Geschlossenstellung und in der Offenstellung der Verschlußlamellen 4 dargestellt.

Die Schwenkarme 3 sind um Schwenkachsen 5 drehbar gelagert, die an einem nicht dargestellten kreisringförmigen Lamellenträger befestigt sind. Die Stifte 2 greifen formschlüssig in Langlöcher 6 ein, die nasenförmig radial nach außen weisend am äußeren Umfang der Synchronringscheibe 1 angeformt sind. Der Abstand der Nasen mit den Langlöchern 6 korrespondiert mit dem Abstand der Schwenkachsen 5 auf dem Lamellenträger. Die Stifte 2 sind an den Schwenkarmen 3 so positioniert, dass die an die Synchronringscheibe 1 angeformten Nasen mit den Langlöchern 6 beim Schwenken der Schwenkarme 3 durch die Stifte 2 von den Schwenkachsen 5 weg gedreht werden.

Beim Schwenken der Verschlußlamellen 4 laufen die Stifte 2 in den Langlöchern 9 in radialer Richtung hin und her, während die Synchronringscheibe 1 in den nicht dargestellten Lagerflächen vor und zurück gedreht wird.

## Patentansprüche

1. Vorrichtung zur Synchronisierung der Schwenkbewegung von Verschlußlamellen (4), die jeweils an einem die Schwenkbewegung antreibenden Schwenkarm (3) befestigt sind, der auf einem kreisringförmigen Lamellenträger an einer Schwenkachse (5) drehbar gelagert ist, **dadurch gekennzeichnet, dass** konzentrisch zum Lamellenträger innerhalb eines die Schwenkachsen (5) verbindenden Kreises eine Synchronringscheibe (1) angeordnet ist, die mit jedem der Schwenkarme (3) formschlüssig (2, 6) gekoppelt ist, und die selbst keine originäre Stellfunktion ausübt.

2. Vorrichtung nach Anspruch 1, **dadurch gekennzeichnet, dass** am Umfang der Synchronringscheibe (1) korrespondierend zum Abstand der Schwenkachsen (5) ein nasenförmig radial nach außen weisendes Langloch (6) angeformt ist.

3. Vorrichtung nach Anspruch 2, **dadurch gekennzeichnet, dass** die Schwenkachsen (5) mit einem parallel zur Schwenkachse (5) stehenden Stift (2) versehn sind, der in ein ihm zugeordnetes Langloch (6) formschlüssig derart eingreift, dass er in der Geschlossenstellung der Verschlußlamellen (4) am radial inneren Ende des Langlochs (6) und in der Offenstellung der Verschlußlamellen (4) am radial äußeren Ende des Langlochs (6) steht.

## Claims

1. Device for synchronizing the pivoting movement of shutter blades (4) which are each fastened to a swivel arm (3) driving the pivoting movement which is mounted rotatably on a swivel pin (5) on a circular-ring-shaped blade carrier, **characterized in that** a synchronizing ring disc (1) is arranged concentrically with respect to the blade carrier within a circle connecting the swivel pins (5) and is coupled in a form-fitting manner (2, 6) to each of the swivel arms (3), which disc does not carry out any initial actuating function itself.

2. Device according to Claim 1, **characterized in that** an elongated hole (6) facing radially outward in the form of a lug is integrally formed on the circumference of the synchronizing ring disc (1) in a manner corresponding to the distance between the swivel pins (5).

3. Device according to Claim 2, **characterized in that** the swivel pins (5) are provided with a pin (2) which is parallel to the swivel pin (5) and engages in a form-fitting manner in an elongated hole (6), which is assigned thereto, in such a manner that, in the closed position of the shutter blades (4), said pin is located at the radially inner end of the elongated hole (6) and, in the open position of the shutter blades (4), said pin is located at the radially outer end of the elongated hole (6).

## Revendications

1. Dispositif pour synchroniser le mouvement de pivotement de lamelles d'obturateur (4), qui sont fixées à chaque fois à un bras pivotant (3) entraînant le mouvement de pivotement, lequel est monté de manière rotative sur un support de lamelles de forme annulaire circulaire au niveau d'un axe de pivotement (5), **caractérisé en ce que** concentriquement au support de lamelles, à l'intérieur d'un cercle reliant les axes de pivotement (5), est disposée une rondelle annulaire de synchronisation (1), laquelle est accouplée à chacun des bras pivotants (3) par engagement par correspondance de forme (2, 6), et n'exerce pas elle-même une fonction de réglage initial.

2. Dispositif selon la revendication 1, **caractérisé en ce qu'**à la périphérie de la rondelle annulaire de synchronisation (1) est façonné, de manière correspondant à la distance des axes de pivotement (5), un trou oblong (6) orienté radialement vers l'extérieur en forme de nez.

3. Dispositif selon la revendication 2, **caractérisé en ce que** les axes de pivotement (5) sont pourvus d'une goupille (2) disposée parallèlement à l'axe de pivotement (5), laquelle vient en prise par engagement par correspondance de forme dans un trou oblong (6) associé à celle-ci, de telle sorte qu'elle soit située dans la position fermée des lamelles de fermeture (4), à l'extrémité radialement interne du trou oblong (6), et dans la position d'ouverture des lamelles de fermeture (4), à l'extrémité radialement extérieure du trou oblong (6).
